# EUROPEAN PATENT APPLICATION

(11) **EP 4 737 409 A1**
(43) Date of publication of application: **06.05.2026**
(21) Application number: 24383204.5
(22) Date of filing: 04.11.2024
(51) Int. Cl.: C03C 8/02, C09D 11/34, B02C 21/00, B41M 5/00

(54) **DIGITAL GLAZE PRODUCTION PROCESS**

(71) Applicant: Mardiecar, S.L., 12540 Vila-Real Castellón (ES)
(72) Inventor: Villalba Balaguer, Maria Isabel, Vila-Real (ES)
(74) Representative: Mora Granell, José Agustín

(57) **Abstract**

Digital glaze production process for particulate mixtures for ceramic glazes intended for high-discharge digital inkjet printing with a minimum resolution of 200 dpi, comprising a weighted dry ball mill (1) with a dynamic classifier (2) and a pneumatic homogenizer (3), characterized in that it comprises the steps of:
dosing and feeding (4) the raw materials of the glaze components.
milling the components in a weighted dry ball mill (1); where an induced airflow through the ball mill (1) drags the finer particles through a duct and directs them to
a dynamic classifier (2) which redirects those particles larger than the required size back to the mill (1), and transport the finer particles to
a receiving system (6) with a capacity between 1 to 100 ton at the outlet of the dynamic classifier (2), equipped with filters to avoid the particle flow to the vacuum pump (8), and integrated with
a pneumatic homogenizer (3) capable of mixing the material contained in the receiving system (6), in partial or total capacity.

## Description

### TECHNICAL SECTOR

The present invention relates to a novel glaze production process, which allows the dry production of the glaze, improving its long-term quality. It is designed for obtaining a dry premix for high-discharge digital ceramic glazes.

### STATE OF THE ART

The industrial production of tiles has traditionally involved the application of ceramic glazes as a coating, meeting functional protection requirements and providing aesthetic value to the product through shine, contrast and texture.

The application of glazes to ceramic products is carried out industrially using different techniques such as a fluid curtain, screen printing, gravure, flexography and, more recently, through digital printing systems. This last technique presents the best performance since it enables the control of the application of the glaze and improves the efficiency in the use of material. However, it presents technical challenges given that digital injection poses specific requirements of granulometry and rheology to be viable.

The application of digital glaze printing began in 2011 through the application of thin layers of material by the company Esmalglass-Itaca Grupo S.A in 2011. Later, new types of glazes that enabled their application in "high discharges" were developed, reaching levels between 100 and 200 g/m² in one injection pass. Its characteristics and production processes are specified in the patents ES2386267B2 and ES2468553B1.

Initially, digital glazes with particle sizes d₉₅ < 1 µm were used, which implied high costs and high energy consumption in the production of such small particles. Later developments have allowed obtaining digital glazes with high grammages D₁₀₀ < 40-65 µm as described in patents ES2489293B1 and ES2674978B1. These patents highlight that energy consumption is a critical point in the viability of high deposition digital glaze.

On the other hand, the size of the particles that conform the glaze will determine the minimum diameter of the digital injectors to be used for its application, generally using injector diameters between 5-10 times the diameter of the maximum particle present in the glaze. It is well known that the resolution of the digital printing is inversely proportional to the diameter of the injectors. Thus, resolution will be greater if the diameter of the injectors is smaller.

Depending on the characteristics of the desired final product, a balance is sought in the distribution of granulometry, so the requirements of resolution, rheology, deposition rate and specific energy consumption of the glaze production are complied.

Given a specific particle size distribution in the glaze, the feasibility of its production depends on the overall production process, which incorporates factors such as equipment availability, suitability for continuous production, level of automation, cleaning requirements, among others.

The production methodology for high-discharge digital glazes, according to patent ES2386267B2, consists of mixing solid raw materials, wet ball mill grinding (with water, solvents and additives) of those materials that make up the glaze. Then the particle size control of the material is controlled by screening and filtering at the mill discharge, and control and adjustment of viscosity. The final product is a liquid where the glaze particles are in suspension.

The described production process sets out specifications that imply wet grinding and batch production, which requires the intervention of an operator to control the granulometry of the material present inside the mill. In this process, the material classification based on its size is carried out at the time of the batch discharge. These characteristics prevent production from being carried out in a continuous process and/or with low intervention of an operator, significantly constraining the potential for automation.

The above-mentioned patents conceived the production of glaze that are dispatched as a ready to use mixture of the solid particles and a solvent agent. Although practical, this implies difficulties in preventing the settling of the particles and imposes an expiration time of the glaze.

In this context, there is a need for an efficient production process for high-discharge digital glazes, based on an automatable circuit, capable of achieving continuous or high-volume batch production, with no or few stops required to measure the particle size, or for cleaning when changing materials. Additionally, the alternative of dispatching a dry mix of the glaze could prove practical if solid materials prone to settling are required in the glaze composition, and to avoid an expiration time for the product.

The applicant does not know of any process or device similar to the invention, or which can be considered as a solution to the same technical problems.

### BRIEF EXPLANATION OF THE INVENTION

The invention is a glaze production process. It allows for the creation of a ceramic glaze for digital printing with a very high resolution (more than 250 dpi)

Glaze production process for ceramic glazes intended for high-discharge digital inkjet printing. It comprises the steps of dosing and feeding several raw materials, milling the components in a dry ball mill; where part of the air drawn in by the dynamic classifier goes through the ball mill dragging the particles that are small enough to be carried by the airflow. The particulate selected in the dynamic classification is sent to a receiving system at the outlet of the dynamic classifier, equipped with filters to retain the fine particles and to allow the air to flow to the vacuum pump. The fine particles stored in the receiving system are homogenized by a pneumatic homogenizer integrated to the receiving system.

It must be considered that the raw materials that compose the glaze have different hardnesses, so the residence time of each component in the mill is different. Therefore, the homogenizer is required to ensure that the final product is homogeneous for its intended use.

Further particular embodiments will be discussed later.

### DESCRIPTION OF THE DRAWINGS

For a better understanding of the invention, the following figures are included that show examples of particular embodiments.

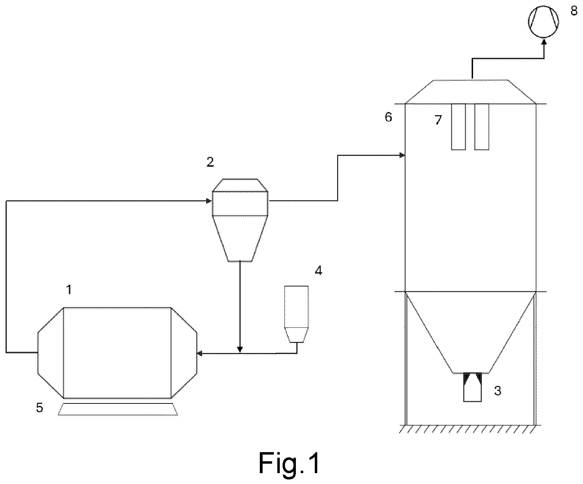

Figure 1 represents a diagram of the operation of a first exemplary embodiment.

Where:
(1) Ball mill.
(2) Dynamic classifier.
(3) Homogenizer.
(4) Dosing and feeding system.
(5) Weighting system.
(6) Receiving system.
(7) Filters.
(8) Vacuum pump.

### EMBODIMENTS OF THE INVENTION

An embodiment of the invention will be briefly described below, as an illustrative and nonlimiting example thereof.

In general, the glaze production process comprises two main stages: the first stage is a closed mill-classification circuit with a weighted dry ball mill (1) and a dynamic separator (2); the second stage uses a homogenizer (3) to mix the output of the previous stage.

The use of a dry ball mill enables the reduction of the raw materials to the required particle size, in an energy efficient way, compared to other milling processes. In addition to this, ball milling allows the production of round particles which will help to reduce the viscosity of the glaze, making it suitable for digital applications.

The closed mill-classification circuit, with a weighted dry ball mill (1) and a dynamic separator (2), makes the system easily controlled and automated, suitable for continuous production and able to obtain the required size distribution of the product (d₁₀>1µm and d₉₇<15µm).

The circuit starts with a dosing and feeding system (4) for the particulate raw materials, using equipment such as, but not limited to, silos and weighing equipment that pour onto a conveyor belt. The particulate raw materials are introduced into a closed dry grinding circuit, with the weighted ball mill (1) and the dynamic separator (2). Particles are carried from the ball mill (1) to the dynamic classifier (2) by suction, for this purpose, part of the air flow of the dynamic classifier (2) comes through the ball mill (1). In the dynamic classifier (2), those particles with a diameter larger than a specific dimension are blocked by inertial effects and are sent back to the ball mill (1); those with a smaller diameter are governed by the drag forces and are carried out of the classifier by the air flow. The adjustment of the operational conditions of the mill (1), and the classifier (2), as well as the airflow level enables the grinding and classification process to achieve a narrow particle size distribution (e.g., d₁₀>1µm and d₉₇<15µm).

The ball mill (1) comprises a weighing system (5) which allows the measurement of the ball mill (1), grinding media (balls) and glaze altogether. The weight of the first two could be considered constant, so weighting the system enables the estimation of the mass of the glaze components contained in the mill.

At the outlet of the dynamic classifier (2) there is a receiving system (6) containing filters (7) to retain the fine particles and to allow the air to flow to a vacuum pump (8).

All the components of the system are connected by a system of well-sealed connecting ducts to avoid losses of product and suction power.

Once in the receiving system (6), the milled material is homogenized pneumatically with a pneumatic homogenizer (3) to avoid stratification due to the different grinding times of the components. This homogenization can be carried out progressively or in production batch intervals (for example 1-100 tons). The pneumatic homogenization could be performed by, but not limited to, using pulses of pressurized air at the bottom of the receiving system (6), or by pneumatically recirculating the material from the bottom of the receiving system (6) to its top through an auxiliary duct.

The receiving system comprises discharge valves (10) that allow complete emptying of the homogenized material, but it is also possible to empty it only partially.

The resulting material is a dry particulate mix for digital glazes. Which could be mixed with solvent agents in an additional step to be offered as a ready to use product or dispatched dry and mixed with solved agents just before its application.

## Claims

1. Digital glaze production process for particulate mixtures for ceramic glazes intended for high-discharge digital inkjet printing, comprising a dry ball mill (1) **characterized in that** it comprises the steps of:
dosing and feeding (4) the raw materials of the glaze components;
milling the components in a dry ball mill (1); where an induced airflow through the ball
mill (1) drags the finer particles through a duct and directs them to a dynamic classifier (2) which redirects those particles larger than the required size
back to the mill (1), and transport the finer particles to
a receiving system (6) at the outlet of the dynamic classifier (2), equipped with filters (7) to avoid the particle flow to the vacuum pump (8) that induces the airflow, and integrated with
a pneumatic homogenizer (3) for mixing the material contained in the receiving system (6).

2. Digital glaze production process, according to claim 1, where the ball mill (1) comprises a weighing system (5).

3. Digital glaze production process, according to claim 1, where the pneumatic homogenizer (3) comprises a system of discharge valves that allow complete emptying of the homogenized material.
